# EUROPÄISCHE PATENTSCHRIFT

(11) **EP 3 752 005 B1**
(45) Veröffentlichungstag und Bekanntmachung des Hinweises auf die Patenterteilung: **17.06.2026**
(21) Anmeldenummer: 19705337.4
(22) Anmeldetag: 13.02.2019
(51) Int. Cl.: A23J 1/14

(54) **VERFAHREN UND VORRICHTUNG ZUM AUFSCHLUSS VON HÜLSENFRÜCHTEN**
METHOD AND APPARATUS FOR THE DECOMPOSITION OF PULSES
PROCÉDÉ ET APPAREIL POUR LA DÉCOMPOSITION DE LÉGUMES SECS

(30) Priorität: 14.02.2018 DE 102018202275
(43) Veröffentlichungstag der Anmeldung: 23.12.2020
(73) Patentinhaber: endeco GmbH, 53567 Buchholz-Mendt (DE)
(72) Erfinder: BERGMANN, Karl-Heinz, 53773 Hennef (DE); BUNTROCK, Reiner, 49824 Emlichheim (DE)
(74) Vertreter: Jostarndt Patentanwalts-AG
(86) Internationale Anmeldenummer: PCT/EP2019/053553
(87) Internationale Veröffentlichungsnummer: WO 2019/158589

(56) Entgegenhaltungen:
- EP-A1- 2 052 623
- WO-A2-03/101573
- AT-B- 326 470
- DE-A1- 2 504 249
- GB-A- 1 421 623
- US-A- 2 785 155
- US-A- 3 689 287
- US-A- 4 060 203
- ANONYMOUS: "SUPATRON - HIgh sehar in-line Homogeniser", 3 April 2013 (2013-04-03), pages 1 - 8, XP055657628, Retrieved from the Internet <URL:http://www.pump-kin.com.cn/uploadfile/file/20130403114922.pdf> [retrieved on 20200114]

## Beschreibung

### Gebiet der Erfindung

Die Erfindung bezieht sich auf ein Verfahren und eine Vorrichtung zum Aufschluß von Hülsenfrüchten und hier insbesondere von Erbsen. Die Erfindung betrifft weiterhin ein Verfahren zur Aufreinigung von Proteinen einer sauren proteinhaltigen Suspension, die durch den Aufschluss von Hülsenfrüchten gewonnen wurde.

### Hintergrund der Erfindung

Proteinisolate pflanzlichen Ursprungs stellen eine wertvolle Alternative oder Ergänzung zu tierischen Proteinen in Lebensmitteln oder Futtermitteln dar. Zum Beispiel können Pflanzenproteine in Lebensmitteln die tierischen Proteine wirksam ersetzen, und dies oft zu geringeren Kosten. Darüber hinaus können viele Produkte, die traditionell tierische Proteine enthalten, insbesondere Milchprodukte, eine Hauptursache für Nahrungsmittelallergien sein.

Die meisten Hülsenfrüchtler (Leguminosen) zeichnen sich dadurch aus, dass sie in ihren Wurzelknöllchen eine Symbiose mit stickstofffixierenden Bakterien (*Rhizobien*) eingehen. Die Leguminosen machen sich dadurch unabhängig vom Nitratgehalt des Bodens und sind in extrem stickstoffarmen Böden erst lebensfähig. Die Wurzelknöllchen sind auch dafür verantwortlich, dass Leguminosen sehr nährstoffreiche Pflanzen sind, die reichlich Proteine, Vitamine und Mineralstoffe enthalten. Entsprechend gehören Leguminosen zu den besten Quellen für pflanzliches Protein. Da Leguminosen wie Erbsen (Pisum sativum) neben einem hohen Proteingehalt leicht verfügbar sind und eine besonders ausgewogene Aminosäurezusammensetzung aufweisen, stellen diese eine Proteinquelle dar, die eine wertvolle Alternative für tierische Proteine darstellt. Beachtlicherweise enthalten Leguminosen neben den Proteinen auch Stärke und zudem antinutrive Faktoren (ANF) wie Lectine, Alkaloide, Saponine, Cyanglycoside, Isoflavone oder Gerbstoffe, die unerwünscht sind.

Die wesentlichen Herausforderungen bei der Bereitstellung von Pflanzenproteinen liegen in der Proteinzusammensetzung und Proteinreinheit und umfassen Aspekte, die sich beispielsweise auf Extraktion, Fraktionierung und Vor- und Nachbehandlungen beziehen. Beachtlicherweise haben die einzelnen Prozessschritte einen großen Einfluss auf die Qualität des isolierten Pflanzenproteins. Beachtlicherweise bestimmen die Art und Menge der Verunreinigungen in Proteinisolaten oder -extrakten ihren endgültigen Wert. Solche Verunreinigungen umfassen beispielsweise Kohlenhydrate. Zum Beispiel enthalten Leguminosen einen signifikanten Anteil von Flatulenz induzierenden Oligosacchariden (z. B. Raffinose, Stachyose und Verbascose), die besonders unerwünscht sind. Während im allgemeinen Kohlenhydrate unerwünschte Verunreinigungen in dem endgültigen Proteinisolat sind, sind einige andere "Verunreinigungen", wie Vitamine oder Mineralien, per definitionem nicht unerwünscht oder können sogar für ernährungsphysiologische und / oder physikochemische Aspekte des Proteinisolats vorteilhaft sein. Zusätzlich zu der Auswirkung auf die endgültige Zusammensetzung der Proteinisolate oder - extrakte kann das Aufschluss- und/oder Proteinisolierungsverfahren dramatische Auswirkungen auf die physikochemischen oder funktionellen Eigenschaften des Proteinisolats haben. Insbesondere werden die Proteinlöslichkeit, die Viskosität, die Emulgierfähigkeit, die Farbe, der Geschmack oder der Geruch stark durch die verwendeten Techniken beeinflusst.

Daher ist die Gewinnung eines Proteinisolats von hoher Qualität mit spezifischen gewünschten Eigenschaften sehr komplex und beinhaltet typicherweise multiple kostenintensive und zeitaufwendige Verfahrensschritte.

Im Stand der Technik haben sich insbesondere zwei unterschiedliche Verfahren zur Trennung der einzelnen Fraktionen von Hülsenfrüchten, und insbesondere hier der Erbse, etabliert. Bei beiden Verfahren wird eine trockene Vermahlung der Erbse als erster Verfahrensschritt angewendet.

Im ersten Verfahren erfolgt eine trockene, sehr feine Vermahlung der Erbse gefolgt von einer trockenen Trennung bzw. Anreicherung der Fraktionen mittels Windsichtung.

Im zweiten Verfahren wird eine trockene Vorvermahlung der Erbse durchgeführt und das resultierende Erbsenmehl anschließend durch Zugabe einer wässrigen Lösung angemaischt. Optional kann hier noch ein anschließende nasse Nachzerkleinerung auf einer Reibe erfolgen, bevor es dann zur nassen Trennung der Fraktionen mittels Protein-, Faser- und Stärkegewinnungsprozess kommt.

Bei dem ersten Verfahren entstehen durch die intensive Trockenvermahlung kleine bis sehr kleine Partikel die sich im nachfolgenden Prozess nur ungenügend separieren lassen. Die so gewonnenen Bestandteile (Stärke, Fasern, Protein) lassen sich nicht mit ausreichender Genauigkeit voneinander trennen.

Bei dem zweiten Verfahren entstehen ebenfalls durch die Trockenvermahlung kleine bis sehr kleine Partikel. Der Anteil an gebundener Stärke in der Faser ist trotz Auswaschung mit Wasser noch relativ hoch (12-15%). Ein großer Anteil des Materials ist kleiner als die kleinste Lochung der Siebe der Faserabtrennung. Hierdurch entsteht ein erhöhter Feinfaseranteil im Prozess, der unerwünscht ist. WO 03/101573 beschreibt ein Verfahren zur Gewinnung von isoliertem Sojaprotein, bei dem Sojamehl in Wasser vermischt, bei einem pH Wert von 5,5 mit einem "Dissolver" homogenisiert wird, das 15 Minuten lang gequollene Homogenisat mit einem Hochdruckdesintegrator weiter zerkleinert wird, das derart erhaltene feine Homogenisat unter rühren mit Natronlauge auf einen pH-Wert von 9 eingestellt wird und das alkalische Gemisch nach einer Verweilzeit von 10 Minuten einer mehrfachen Trennung durch Zentrifugieren unterworfen wird.

Es besteht daher der Bedarf an Aufschlussverfahren und Proteinisolierungsverfahren von Hülsenfrüchten die hinsichtlich der oben genannten Nachteile verbessert sind.

### Zusammenfassung der Erfindung

Es ist eine Aufgabe der vorliegenden Erfindung, ein verbessertes Verfahren zum proteinisolierenden Aufschluß von Hülsenfrüchten bereitzustellen. Gemäß eines ersten Aspektes der Erfindung wird ein Verfahren zum Aufschluss von Hülsenfrüchten ausgewählt aus der Gruppe umfassend Cajanus cajan, Cicer arietum, Lens culinari, phaseolus vulgaris, Pisum sativum, Vica faba, Vigna mungo, Vigna radiata, Vigna unguiculata und Kombinationen hiervon, bereitgestellt, das die folgenden Schritte umfasst:
(a) Vermischen der Hülsenfrüchte mit einem wässrigen Extraktionsmittel;
(b) Vorzerkleinerung der Mischung aus Schritt (a) durch ein Taschenkegelwerkzeug und/oder ein Kammerwerkzeug als Rotor-Stator-Homogenisator unter Zugabe eines wässrigen Extraktionsmittels durch Stator-Injektion;
(c) Inkubation der durch Schritt
(b) vorzerkleinerten Hülsenfrüchte unter weiterer Zugabe des Extraktionsmittels für eine Dauer von mindestens 20 Minuten;
(d) Feinvermahlung der gemäß Schritt (c) inkubierten, vorzerkleinerten Hülsenfrüchte durch ein Kammerwerkzeug und/ oder ein Düsenwerkzeug als Rotor-Stator-Homogenisator.

Wie die Erfinder festgestellt haben, wird durch die erfindungsgemäße mehrstufige Nassvermahlung die Stärke nahezu vollständig aus dem Zellverband gelöst, ohne dass die Fasern zu stark zerkleinert werden oder die Stärkekörner beschädigt werden. Dadurch resultiert ein geringerer Anteil an gebundener Stärke an der Faser.

Zudem werden durch den Einsatz der vorab genannten Werkzeuge und den intensiven Stoffaustausch die Stärkekörner schonend von den Fasern gelöst und sämtliche Partikel homogen mit dem Extraktionsmittel benetzt.

Gegenüber der Trockenvermahlung resultieren deutlich größere Partikel bei vergleichbarer Stärkeausbeute, was in einer einfacheren Aufreinigung resultiert.

Das Verfahren führt zudem auch zu einer geringeren thermischen Belastung des Materials, was angesichts der leichten Denaturierung der vorliegenden Proteine von erheblicher Relevanz ist.

Durch die Zugabe des Extraktionsmittels zwischen Schneid- und Mahlwerkzeug durch die sogenannte Stator-Injektion wird eine lokale Überdosierung des Extraktionsmittels vermieden.

Das Verfahren hat weiterhin den Vorteil, dass es mit aus dem Stand der Technik bekannten Werkzeugen und insbesondere Hybridwerkzeugen betrieben werden kann.

Zudem kann das Verfahren mit seinen Verfahrensschritten ohne Probleme in eine Prozeßlinie eingebunden werden und ist daher insbesondere für den großtechnischen Einsatz geeignet.

### Die Erfindung im Einzelnen

Das Ausgangsmaterial zum Einsatz in dem erfindungsgemäßen Verfahren sind die Hülsenfrüchte ausgewählt aus der Gruppe bestehend aus Cajanus cajan (Straucherbse), Cicer arietum (Kichererbse, Felderbse), Lens culinaris (Küchen-Linse), phaseolus vulgaris (Gartenbohne), Pisum sativum (Gartenerbse), Vicia faba (Ackerbohne, auch Saubohne, Schweinsbohne, Favabohne, dicke Bohne, große Bohne, Pferdebohne, Viehbohne, Faberbohne oder Puffbohne genannt), Vigna mungo (Urdbohne, auch Linsenbohne genannt), Vigna radiata (Mungbohne, auch Mungobohne, Jerusalembohne oder Lunjabohne genannt), Vigna unguiculata (Augenbohne, auch Kuhbohne, Schwarzaugenbohne oder Schlangenbohne genannt) und Kombinationen hiervon.

In einer bevorzugten Ausführungsform wird das Verfahren für den Aufschluss von Samen der Pisum sativum Pflanze oder der Cajanus cajan-Pflanze (Straucherbse) verwendet.

In einer Ausführungsform der Erfindung werden die (luft)getrockneten Samen für den Aufschluss verwendet, dies stellt die übliche Lagerform für Hülsenfrüchte dar.

In einer alternativen Ausführungsform können auch frische oder partiell getrocknete Samen verwendet werden. Da es sich bei dem Verfahren um eine

Nassvermahlung handelt, stellt dies einen entscheidenden Vorteil gegenüber den herkömmlichen Trockenvermahlungsverfahren dar.

In einer bevorzugten Ausführungsform werden ganze, d.h. nichtvorzerkleinerte Hülsenfrüchte bei dem Aufschlussverfahren eingesetzt. alternativ können auch bereits grob zerkleinerte Hülsenfrüchte eingesetzt werden. Die im Schritt (a) zur Vermischung mit dem Extraktionsmittel verwendeten Hülsenfrüchte können dementsprechend ganze Hülsenfrüchte oder grob zerkleinerte Hülsenfrüchte darstellen.

Gemäß der Erfindung wird bei der Vorzerkleinerung ein Taschenkegelwerkzeug und/oder ein Kammerwerkzeug als Rotor-Stator-Homogenisator eingesetzt.

Insbesondere bevorzugt ist hierbei die Verwendung eines Hybridwerkzeugs aus Taschenkegelwerkzeug und Kammerwerkzeug. Damit liegt ein Hybridwerkzeug mit einer Schneid- und einer Mahlstufe vor.

In einer bevorzugten Ausführungsform führt der Vorzerkleinerungsschritt zu Partikel mit einer mittleren Partikelgröße d50 von zwischen 250 und 400 µm, hierbei bedeutet d50, dass 50% der Partikel kleiner sind als der angegebene Wert.

Die gewünschte Partikelgröße lässt sich sowohl bei der Vorzerkleinerung als auch bei der Feinvermahlung durch Wahl des Werkzeugs, der Werkzeugkonfiguration wie beispielsweise radiales und/oder axiales Spaltmaß und der Drehzahl einstellen.

### Bei der Vorzerkleinerung der Hülsenfrüchte wird das wässrige

Extraktionsmittel bei dem Rotor-Stator-Homogenisator über Stator-Injektion hinzugegeben. Dadurch erfolgt bei Einsatz des erfindungsgemäßen Hybridwerkzeugs eine Zugabe des Extraktionsmittels zwischen der Schneidzone und der Mahlzone.

Erfindungsgemäß wird nach dem Vorzerkleinerungsschritt zu den vorzerkleinerten Hülsenfrüchten erneut wässriges Extraktionsmittel hinzugegeben und nach Vermischung mit den Hülsenfrüchten für mindestens 20 Minuten inkubiert. Besonders bevorzugt erfolgt die Inkubation für eine Zeitdauer zwischen 30 und 120 Minuten. Im Rahmen dieser Inkubation nehmen die vorzerkleinerten, eine größere Oberfläche aufweisenden Hülsenfrüchte, signifikante Mengen an Extraktionsmittel auf und bilden dadurch als gequollene Hülsenfrüchte ein optimales Ausgangsmaterial für den folgenden Nassvermahlungsschritt.

Bevorzugt erfolgt wird diese Inkubation in einem separaten Behälter durchgeführt, dem sogenannten Quell-Tank. Dieser Behälter ist als separater Behälter von dem Behälter getrennt, in dem die Vorzerkleinerung durchgeführt wird.

Zweckmäßigerweise erfolgt diese Inkubation bei Raumtemperatur.

Als wässriges Extraktionsmittel wird bevorzugt eine alkalische Lösung und besonders bevorzugt 50%ige Natronlauge eingesetzt.

Das Verhältnis (v/m) der Gesamtmenge an wässrigem Extraktionsmittel zu den Hülsenfrüchten liegt zwischen 500:1 und 300:1 und bevorzugt bei 400:1.

In einer weiteren Ausführungsform wird zunächst Wasser zu den Hülsenfrüchten (bevorzugt Erbsen) hinzugegeben und dann durch Zugabe von Natronlauge auf den gewünschten pH-Wert eingestellt.

In einer bevorzugten Ausführungsform wird so viel Extraktionsmittel hinzugegeben, dass der Anteil an Trockensubstanz (TS) in dem Gemisch aus Erbsen und Extraktionsmittel weniger als 25% TS beträgt.

In einer weiteren Ausführungsform hat das fein vermahlene Gemisch für die bevorzugt in einem Dekanter erfolgende Abtrennung der Fasern und Stärkepartikel einen Gehalt von weniger als 17% TS.

In einer Ausführungsform erfolgt der Zulauf zu dem Behälter, in dem die Feinvermahlung durchgeführt wird, aus dem vorgelagerten Quelltank ohne aktives Pumpen allein über die Höhendifferenz des höher gelagerten Quelltanks.

In einer Ausführungsform wird in dem Feinvermahlungsschritt wässriges Extraktionsmittel hinzugegeben. Dies erfolgt bevorzugt über eine Stator-injektion direkt in die Mischzone des Homogenisators.

Gemäß der Erfindung wird bei der Feinvermahlung ein Mahlwerkzeug zusammen mit einem Mischwerkzeug eingesetzt, bzw. ein Werkzeug, das sowohl eine Mahlstufe als auch eine Mischstufe aufweist.

Bei dem Verfahren zum Aufschluss von Hülsenfrüchten ist das Werkzeug für die Feinvermahlung ein Rotor-Stator-Homogenisator.

Der Rotor-Stator-Homogenisator ist hierbei ein Kammerwerkzeug und/oder ein Düsenwerkzeug, und besonders bevorzugt ein Kammerwerkzeug.

In einer bevorzugten Ausführungsform führt der Feinvermahlungsschritt zu Partikel mit einer mittleren Partikelgröße d50 von zwischen 100 und 300 µm, hierbei bedeutet d50, dass 50% der Partikel kleiner sind als der angegebene Wert. Bei dem erfindungsgemäßen Verfahren weist der Rotor-Stator-Homogenisator bevorzugterweise eine Relativgeschwindigkeit am äußeren Ring
vom zwischen 30 m/sec und 60 m/sec auf. Es hat sich herausgestellt, dass derartige Relativgeschwindigkeiten eine besonders gute Zerkleinerung bzw. Feinvermahlung erlauben, ohne dass die Hülsenfrüchte zu stark erhitzt werden.

In einer Ausführungsform der Erfindung beträgt bei dem Rotor-Stator-Homogenisator der radiale Scherspalt zwischen Rotor und Stator zwischen 0,5 mm und 2,5 mm, bevorzugt zwischen 0,7 mm und 1,8 mm und besonders bevorzugt zwischen 1,0 mm und 1,2 mm.

In einer weiteren Ausführungsform des erfindungsgemäßen Verfahrens beträgt der axiale Scherspalt am innersten Ring maximal 5 mm.

Zweckmäßigerweise nimmt der axiale Scherspalt von innen nach außen ab, so dass er am äußersten Ring ≥ 0,2 mm beträgt.

Gemäß einer bevorzugten Ausführungsform der Erfindung wird das wässrige Extraktionsmittel in den zentral gelegenen Stator gegeben und hierbei besonders bevorzugt durch Stator-Öffnungen direkt in die Scher- und Mischzone des Homogenisators zugeführt.

In einer bevorzugten Ausführungsform werden bei dem Feinvermahlungsschritt gröbere Partikel separiert, beispielsweise durch einen Zentrifugalkraftabscheider und wieder in den Homogenisator und dort bevorzugt in die Mahlzone zugeführt.

In einer weiteren Ausführungsform umfasst das Aufschlussverfahren die folgenden, der Nassvermahlung gemäß einem der Ansprüche 1 bis 5 nachgelagerten Verfahrensschritte zur Aufreinigung von Proteinen:
b) zweistufige Abtrennung der proteinhaltigen Lösung (sog. Fruchtwasser) und der Stärke/Faser-Fraktion;
c) Fällung des Proteins aus der proteinhaltigen Lösung durch Anpassung des pH-Wertes unter Einstellung des isoelektrischen Punktes;
d) Abtrennung des gefällten Proteins, bevorzugt mittels Dekanterzentrifuge;
e) Herstellen einer proteinhaltigen sauren Suspension durch Suspendieren des in Schritt (d) erhaltenen gefällten Proteins in Wasser;
f) Herstellung einer homogenen Suspension durch Intensivvermischung der proteinhaltigen sauren Suspension mittels eines Kammerwerkzeugs oder eines Hybridwerkzeugs aus Kammerwerkzeug und Düsenwerkzeug als Rotor-Stator-Homogenisator;
g) pH-Werterhöhung der Suspension aus Schritt (f) mittels eines Kammerwerkzeugs oder eines Hybridwerkzeugs aus Kammerwerkzeug und Düsenwerkzeug als Rotor-Stator-Homogenisator durch Zugabe einer alkalischen Lösung über Stator-Injektion im laufenden Rotorbetrieb bis zu einem pH-Wert von zwischen 5,5 und 9,0;
h) Abtrennung des Proteins von der flüssigen Phase durch Zentrifugation oder Filtration der Suspension aus Schritt (f).

Es ist eine weitere Aufgabe der vorliegenden Erfindung, eine verbesserte Vorrichtung zum Aufschluss von Hülsenfrüchten zur Verfügung zu stellen.

Gemäß einem zweiten Aspekt der Erfindung wird eine Vorrichtung zur Durchführung eines Verfahrens gemäß einem der Ansprüche 1 bis 5 bereitgestellt.

Diese Vorrichtung zum Aufschluß von Hülsenfrüchten umfasst eine Prozeßlinie mit einem ersten Abschnitt (I) mit einem oder mehreren Kammerwerkzeug(en) als Rotor-Stator-Homogenisatoren für die Vorzerkleinerung der Hülsenfrüchte und einem zweiten Abschnitt (II) mit einem oder mehreren Kammerwerkzeug(en) als Rotor-Stator-Homogenisatoren für die Feinvermahlung der Hülsenfrüchte.

Die vorzerkleinerten Hülsenfrüchte werden aus dem Abschnitt (I) in den Abschnitt (II) geleitet über einen dazwischen angeordneten Behälter. In einem solchen Behälter kann die Inkubation der der im Abschnitt (I) vorzerkleinerten Hülsenfrüchte durch das hinzugegebene Extraktionsmittel erfolgen. Dies hat den Vorteil, dass der Abschnitt (I) erneut mit Hülsenfrüchten beschickt werden kann, die während der Inkubation der vorherigen Charge im Zwischenbehälter dann im Abschnitt (I) vorzerkleinert werden.

Die Vorrichtung umfasst somit einen zwischen Abschnitt (I) und (II) angebrachten Behälter, den sogenannten Quell-Tank, der flüssigkeitsleitend mit den beiden Abschnitten verbunden ist.

Die Vorrichtung weist zweckmäßigerweise eine oder mehrere Pump- und/oder Umwälzvorrichtungen auf, die den Transport der Hülsenfrüchte, der Zwischenprodukte und/oder des Extraktionsmittels gewährleisten.

In einer bevorzugten Ausführungsform weist die Vorrichtung eine oder mehrere Temperatursensoren zur Messung der Temperatur in den Abschnitten (I) und (II) und optionalen weiteren Behältern auf. Die Temperatur kann hierdurch kontinuierlich überwacht werden und gegebenenfalls durch Anpassung der Prozessparameter, wie beispielsweise durch eine Reduzierung des Gegendrucks gesteuert werden.

In einer weiteren Ausführungsform umfasst die Vorrichtung zudem eine Kühlungsvorrichtung, die insbesondere zur Kühlung von Abschnitt (II) ausgerichtet ist, da insbesondere in diesem Abschnitt durch die hohen Scherkräfte verbunden mit der Rezirkulation eines Partikel-Teilstroms die Temperatur zunehmen wird.

In einem dritten Aspekt betrifft die Erfindung ein Verfahren zur Aufreinigung von Proteinen gemäß dem vorliegenden Anspruch 7

Dieses Verfahren weist mehrere Vorteile gegenüber dem Stand der Technik auf. Zunächst kann es als geschlossenes System ausgestaltet werden, so dass keine Kontamination von außen (bspw. durch menschlichen Kontakt) erfolgt. Weiterhin kommt es nur zu einer geringen thermischen Belastung des Materials. Schließlich erlaubt die Stator-Injektion eine pH-Werterhöhung des Proteins ohne punktuelle Überdosierung.

Die moderate pH-Werterhöhung auf maximal pH 9,0 und bevorzugt auf maximal pH 8,5 führt dazu, dass das als Feststoff vorliegende Protein weiterhin als Feststoff vorliegt, wobei zahlreiche Verunreinigungen wie Salze in Lösung gehen und dadurch vom Protein abgetrennt werden können. Dies stellt somit eine einfache Aufreinigungsmethode für Proteinsuspensionen dar.

Die in diesem Aufreinigungsverfahren einzusetzende proteinhaltige Suspension wird durch das erfindungsgemäße Aufschlussverfahren für Hülsenfrüchten hergestellt.

In einer weiterhin bevorzugten Ausführungsform wird die proteinhaltige saure Suspension durch Suspendieren des in Schritt (iii) erhaltenen gefällten Proteins in in Reinwasser oder demineralisiertem Wasser erhalten und weist vorzugsweise einen pH-Wert von 4,0 bis 5,5 auf.

In bevorzugter Weise wird für den Schritt der Herstellung der homogenen Suspension und den Schritt der pH-Werterhöhung der Suspension derselbe Rotor-Stator-Homogenisator in den Schritten (e) und (f) verwendet.

Zweckmäßigerweise tritt das Material axial in den Rotor-Stator-Homogenisator ein und wird radial wieder ausgetragen. Hierbei wirken entsprechend des verwendeten Werkzeugs Scher-, Kompressions- und Dekompressionskräfte auf das Material beim Durchlaufen durch das Werkzeug. Durch die mehrstufige Scherung, die hochfrequenten oszillierenden Kräfte sowie dem intensiven Stoffaustausch werden alle Partikel vereinzelt und absolut homogen mit der alkalischen Lösung benetzt.

Bei dem Aufreinigungsverfahren ist der verwendete Rotor-Stator-Homogenisator ein Kammerwerkzeug oder ein Hybridwerkzeug aus Kammerwerkzeug und Düsenwerkzeug.

In einer weiterhin bevorzugten Ausführungsform ist der bei dem Aufreinigungsverfahren verwendete Rotor-Stator-Homogenisator ein Kammerwerkzeug, das bevorzugt eines oder mehrere der folgenden Eigenschaften aufweist:
- der radiale Scherspalt zwischen Rotor und Stator beträgt zwischen 0,5 mm und 5 mm;
- der axiale Scherspalt zwischen Rotor und Stator beträgt am innersten Ring maximal 5 mm;
- der axiale Scherspalt zwischen Rotor und Stator nimmt von innen nach außen ab;
- der axiale Scherspalt zwischen Rotor und Stator beträgt am äußersten Ring zwischen 0,2 mm und 1 mm;
- das Kammerwerkzeug weist 2 bis 5 konzentrisch ausgerichtete Zahnkränze auf, die bevorzugt zur kombinierten Axial- und Radialspaltverstellung ausgebildet sind.

In einer Ausführungsform der Erfindung weist bei dem ProteinIsolierungsverfahren der Rotor-Stator-Homogenisator eine Relativgeschwindigkeit am äußeren Ring vom zwischen 20 m/sec und 60 m/sec auf.

In einer bevorzugten Ausführungsform wird bei dem Proteinaufreinigungsverfahren die alkalische Lösung durch Stator-Öffnungen direkt in die Mischzone des Homogenisators zugeführt wird.

Die alkalische Lösung ist erfindungsgemäß eine wässrige Lösung. Diese Lösung hat bevorzugt einen pH-Wert von mindestens 12, besonders bevorzugt von mindestens 13 und insbesondere bevorzugt von größer oder gleich 14.

In einer Ausführungsform ist die alkalische Lösung eine NaOH-Lösung mit zwischen 10 und 40% NaOH, bevorzugt mit zwischen 15 und 30% NaOH und insbesondere mit 20% NaOH.

Die erfindungsgemäße pH-Werterhöhung führt bevorzugt zu einer Suspension mit einem pH-Wert von zwischen 6,5 und 9,0 und besonders bevorzugt zu einem pH-Wert zwischen 7,0 und 8,5.

In einer Ausführungsform der Erfindung erfolgt die Abtrennung der proteinhaltigen festen Phase von der flüssigen, die Verunreinigungen enthaltenden Phase durch Zentrifugation oder Dekantieren.

In einer weiteren Ausführungsform wird das abgetrennte feststoffliche Protein der Trocknung zugeführt.

Offenbart, aber nicht Teil der vorliegenden Erfindung, ist eine Vorrichtung zur Isolierung von Proteinen aus einer sauren proteinhaltigen Suspension bereit, wobei diese Vorrichtung eine Prozeßlinie mit einem Abschnitt (III) mit einem oder mehreren erfindungsgemäßen Rotor-Stator-Homogenisatoren und einem zweiten Abschnitt (IV) zur Abtrennung des als Feststoff anfallenden Proteins umfasst.

In einem weiteren Ausführungsform umfasst die Vorrichtung zur Isolierung der Proteine sowohl die Abschnitte (I) und (II) zum Aufschluss der Hülsenfrüchte als auch die Abschnitte (III) und (IV) zur pH-Werterhöhung und Abtrennung des als Feststoff anfallenden Proteins.

### Definitionen

Ein "Rotor-Stator-Homogenisator" gemäß der Erfindung ist ein Homogenisator mit einem Stator als feststehendem, unbeweglichem Geräteteil und einem Rotor als rotierendem Geräteteil des Homogenisators. Durch die Relativbewegung zwischen Rotor und Stator in Verbindung mit hinreichend kleinen axialen und radialen Spaltbreiten wird das Produkt kontrolliert zerkleinert und/oder dispergiert und tritt lateral aus dem System aus.

Bevorzugterweise handelt es sich hierbei um einen Koaxial-Homogenisator, dass heißt sowohl Stator als auch Rotor besitzen dieselbe zentrale Achse, die entsprechend die Drehachse darstellt.

Ein solcher Homogenisator erlaubt eine effiziente Verteilung einer dispersen Phase in eine umgebende kontinuierliche Phase. Insbesondere bei dem erfindungsgemäßen Aufschlußverfahren, wenn sich beispielsweise Hülsenfrüchte und Extraktionsmittel nicht oder nur schlecht mischen lassen, werden durch den Energieeintrag die Kräfte überwunden, die einer gleichmäßigen Verteilung entgegenwirken.

Die Wirkungsweise von Rotor-Stator-Systemen beruht auf der durch Schubspannungen erzeugten Mikroturbulenz. Diese bildet ein Gebiet hoher Energiedissipation im Bereich der Dispergierwerkzeuge. Die hochkonzentrierte Form des Energieeintrages ist somit die Basis, um die in Stoffgemischen bestehende stabilisierende Wirkung der Grenzflächenspannung zu überwinden. Die Phasengrenzflächen werden dadurch erhöht und somit die gewünschten Produkteigenschaften in Dispersionen erzielt.

Ein "Taschenkegelwerkzeug" gemäß der Erfindung ist ein Rotor-Stator-Homogenisator bei dem der Rotor als zentrales Element einen Kreiskegel oder Kegelstumpf aufweist, der längliche, radial verlaufende Vertiefungen, die sogenannten "Taschen" aufweist. Der Stator ist als Gegenstück mit einem entsprechend komplementär ausgeformten kegel- bzw. kegelstumpfförmigen Vertiefung versehen und weist ebenfalls längliche, radial verlaufende Vertiefungen auf.

Ein "Düsenwerkzeug" gemäß der Erfindung ist ein Rotor-Stator-Homogenisator bei dem zumindest der Stator und bevorzugt Stator und Rotor kreisrundförmige Lochblenden mit definiertem Lochdurchmesser aufweist.

Ein "Kammerwerkzeug" gemäß der Erfindung weist mehrere konzentrisch verlaufende Ringe mit radialen Durchbrüchen auf, wobei die Rotor- und statorseitigen Ringe abwechselnd koaxial ineinandergreifen und so eine Scherwirkung entfalten.

Die bei dem erfindungsgemäßen Verfahren eingesetzten Werkzeuge werden gemäß ihrer Funktionalität wie folgt definiert: Ein "Schneidwerkzeug" ist ein Werkzeug, das eine Schneid- und Scherfunktion aufweist. Ein "Mahlwerkzeug" ist ein Werkzeug, das eine Scher- und Quetschfunktion aufweist und ein "Mischwerkzeug" ist ein Werkzeug, das eine hydrodynamische Scherfunktion aufweist.

### Ausführungsbeispiele

### 1. Vergleich verschiedener Aufschlußtechniken

In einer Versuchsreihe wurden die folgenden drei Varianten der Aufschlussverfahren ausgehend von Erbsen vergleichend durchgeführt:

### 1.1 Einstufige Trockenvermahlung (Vergleichsbeispiel)

Auf einer Mühle mit Turborotor wurden zwei Produkte mit unterschiedlichem Mahlgrad hergestellt und die Partikelgrößenverteilung und den Stärkegehalt (gesamte Stärke und gebundene Stärke) ermittelt.

### 1.2 Zweistufige Nassvermahlung

Mit der Nassmühle wurden zwei Durchläufe mit unterschiedlichen Werkzeugkonfigurationen gefahren. Im ersten Durchlauf wurde eine ganze Erbse vorzerkleinert, im zweiten Durchlauf wurde dann der Erbsenbrei aus dem ersten Durchlauf weiter zerkleinert.

### 1.3 Hybrid-Vermahlung (1. Stufe Trockenvermahlung/ 2. Stufe Nassvermahlung) (Vergleichsbeispiel)

Bei diesem Versuchsansatz wurden zwei unterschiedlich feine, trocken vermahlene Erbsenmehle in Wasser eingemischt und quellen lassen. Der resultierende Erbsenbrei wurde anschließend mit der Nassmühle nachvermahlen.

### 1.2 Ergebnisse

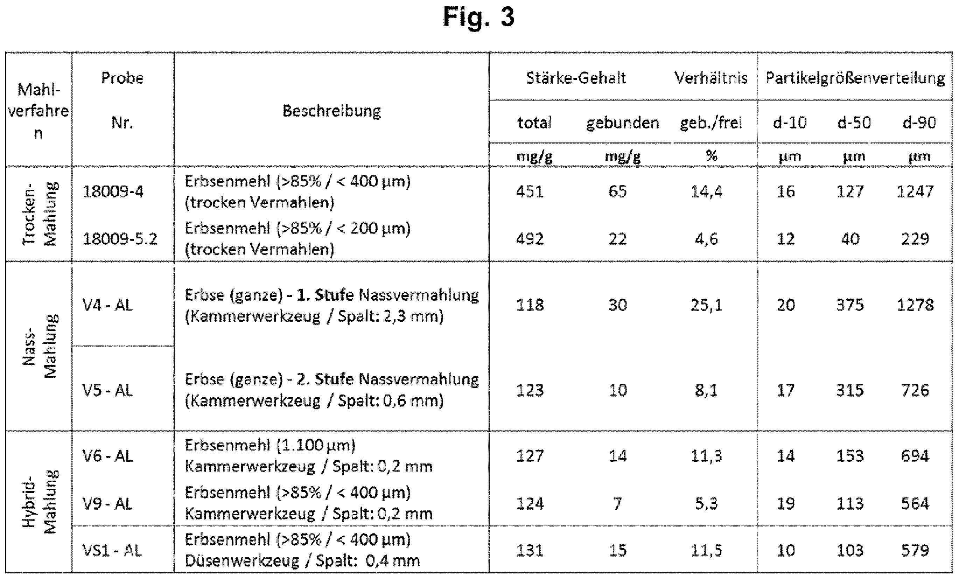

Die Ergebnisse sind in der Tabelle in Figur 3 wiedergegeben. Die zweistufige Nassvermahlung führt zu einer signifikanten Verbesserung des Verhältnisses Partikelgröße d50 zu gebundener Stärke von 8,82 und 8,7 [µm/%] auf 38,9 [µm/%] gegenüber der Trockenvermahlung.

Das Verhältnis von gebundener zu freier Stärke liegt hierbei mit 8.1% bei einer Partikelgröße d50 = 315 µm in einem akzeptablen Verhältnis.

Beachtlicherweise soll bei einem Aufschluss der Anteil an gebundener Stärke möglichst klein sein bei gleichzeitig möglichst großen Partikeln. Dies bringt entscheidende Vorteile bei der Trennung von Stärke und Fasern. Zusätzlich wird der Feinfaseranteil hierdurch reduziert.

Somit führt die zweistufige Nassvermahlung zu einer weitaus besseren Trennung der Erbsenbestandteile.

### Kurze Beschreibung der Abbildungen

Diese und andere Aspekte der Erfindung werden im Detail in den Abbildungen wie folgt gezeigt.
Fig. 1 zeigt eine schematische Skizze für eine Ausführungsform des erfindungsgemäßen Aufschlussverfahrens
Fig. 2 zeigt eine schematische Skizze für eine Ausführungsform des erfindungsgemäßen Aufreinigungsverfahrens
Fig. 3 zeigt die Ergebnistabelle der vergleichenden Mahlversuche

### Detaillierte Beschreibung der Abbildungen

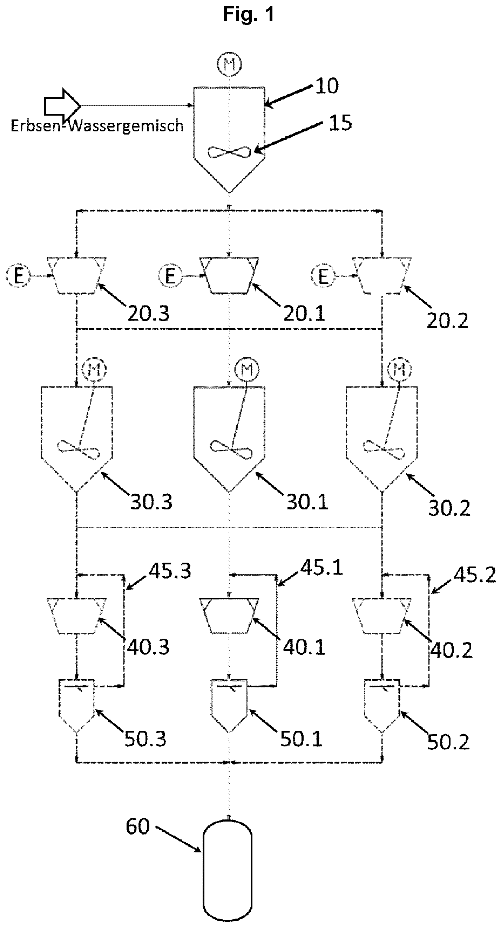

Fig. 1 zeigt eine schematische Skizze einer Prozeßlinie für den Aufschluß von Hülsenfrüchten zur optimalen Gewinnung von darin enthaltenen Proteinen. Das Gemisch aus Wasser und Erbsen wird in dem mit einem Rührer 15 ausgestatteten Anmaischtank 10 durch Zugabe von Natronlauge auf einen alkalischen pH-Wert gebracht und für eine kurze Zeit (vorzugsweise 10 min bis 30 min) inkubiert. Das Gemisch wird dann einem Behälter mit einem Rotor-Stator-Homogenisator 20.1 zugefügt und dort unter Zugabe von zusätzlichem Extraktionsmittel E vorzerkleinert. Anschließend werden die zerkleinerten Erbsen in einem Quelltank mit Rührer 30.1 unter Mischen quellen gelassen für eine Dauer von mindestens 20 min , bevor sie dann in einem zweiten, mit einem Rotor-Stator-Homogenisator ausgestatteten Behälter 40.1 fein zermahlen werden. Grobe Partikel werden über eine Rückführungsleitung 45.1 wieder dem Mahlprozeß zugeführt. Die erhaltene, feinzermahlene Suspension wird dann einer Vorrichtung zur Partikelseparation 50.1 zugeführt, bevor sie dann in der Trennstufe 60 aufgetrennt werden.

Gezeigt ist auch die Möglichkeit, den Durchsatz durch Etablierung paralleler Prozeßlinien (hier X.2 und X.3) zu steigern.

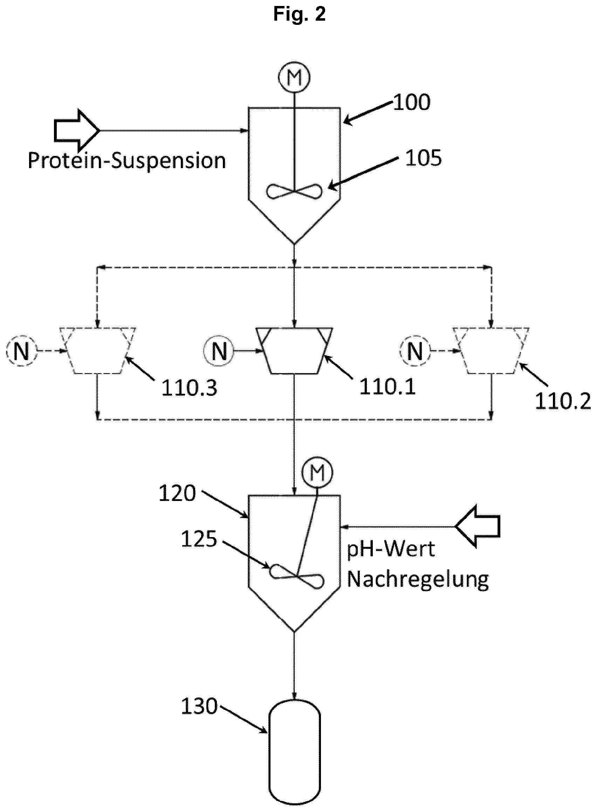

Fig. 2 zeigt eine schematische Skizze einer Prozeßlinie für die Aufreinigung von Proteinen, die als Feststoffe in einer sauren Suspension vorliegen. Die saure proteinhaltige Suspension wird in dem mit einem Rührer 105 ausgestatteten Mischtank 100 vorgelegt. Von da aus wird sie dann in einen Behälter mit einem Rotor-Stator-Homogenisator 110.1 gepumpt und dort durch Intensivvermischung eine homogene Suspension erzeugt. Durch Zugabe der alkalischen Lösung N über Rotor-Stator-Injektion im laufenden Rotorbetrieb wird der pH-Wert auf einen Zielwert von zwischen 5,5 und 9,0 angehoben, so dass Verunreinigungen wie Salze in Lösung gehen, das Protein aber weiterhin als Feststoff in der Suspension verbleibt. In dem nachfolgenden Behälter 120, der einen Rührer 125 aufweist, wird durch Zugabe von Säure oder Lauge der pH-Wert nachgeregelt, bevor in der Trennstufe 130 die Abtrennung des feststofflichen Proteins von der flüssigen Phase, die nun die Verunreinigungen enthält, erfolgt. Gezeigt ist auch die Möglichkeit, den Durchsatz durch Etablierung paralleler Prozeßlinien (hier X.2 und X.3) zu steigern.

Fig. 3 ist eine tabellarische Übersicht zu den Ergebnissen des Ausführungsbeispiels 1.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Liste der Bezugszeichen

- 10: Anmaischtank
- 15,105,125: Rührer
- 20.1: Behälter mit Rotor-Stator Homogenisator für Vorzerkleinerung in der Hauptprozeßlinie
- 20.2, 20.3: Behälter mit Rotor-Stator Homogenisator für Vorzerkleinerung in zwei parallel angeordneten Prozeßlinien 2 und 3
- 30.1: Quelltank mit Rührer in der Hauptprozeßlinie
- 30.2, 30.3: Quelltank mit Rührer in zwei parallel angeordneten Prozeßlinien 2 und 3
- 40.1: Behälter mit Rotor-Stator Homogenisator für Feinvermahlung in der Hauptprozeßlinie
- 40.2, 40.3: Behälter mit Rotor-Stator Homogenisator für Feinvermahlung in zwei parallel angeordneten Prozeßlinien 2 und 3
- 45.1-3: Leitungen zur Rückführung von groben Partikeln zu dem Feinvermahlungsschritt
- 50.1: Vorrichtung zur Abtrennung des Proteins von Stärke und Fasern in der Hauptprozeßlinie
- 50.2, 50.3: Vorrichtung zur Abtrennung des Proteins von Stärke und Fasern in zwei parallel angeordneten Prozeßlinien 2 und 3
- 100: Mischtank für die saure Proteinsuspension
- 100.1: Behälter mit Rotor-Stator Homogenisator für die pH-Werterhöhung in der Hauptprozeßlinie
- 100.2, 100.3: Behälter mit Rotor-Stator Homogenisator für die pH-Werterhöhung in zwei parallel angeordneten Prozeßlinien 2 und 3
- 100: Mischtank für die Nachregelung des pH-Werts
- 130: Trennstufe
- E: Extraktionslösung
- N: Alkalische Lösung

Die optionalen Prozeßlinien 2 und 3 sind gestrichelt dargestellt.

## Patentansprüche

1. Ein Verfahren zum Aufschluss von Hülsenfrüchten ausgewählt aus der Gruppe umfassend Cajanus cajan, Cicer arietum, Lens culinari, phaseolus vulgaris, Pisum sativum, Vica faba, Vigna mungo, Vigna radiata, Vigna unguiculata und Kombinationen hiervon umfassend die
folgenden Schritte:
(a) Vermischen der Hülsenfrüchte mit einem wässrigen Extraktionsmittel;
(b) Vorzerkleinerung der Mischung aus Schritt (a) durch ein Taschenkegelwerkzeug und/oder ein Kammerwerkzeug als Rotor-Stator-Homogenisator unter Zugabe eines wässrigen Extraktionsmittels durch Stator-Injektion;
(c) Inkubation der durch Schritt (b) vorzerkleinerten Hülsenfrüchte unter weiterer Zugabe des Extraktionsmittels für eine Dauer von mindestens 20 Minuten;
(d) Feinvermahlung der gemäß Schritt (c) inkubierten, vorzerkleinerten Hülsenfrüchte durch ein Kammerwerkzeug und/oder ein Düsenwerkzeug als Rotor-Stator-Homogenisator .

2. Verfahren zum Aufschluss von Hülsenfrüchten gemäß Anspruch 1, **dadurch gekennzeichnet, dass** die Hülsenfrüchte ausgewählt sind aus der Gruppe umfassend Cajanus cajan, Pisum sativum und Kombinationen hiervon.

3. Verfahren gemäß einem der Ansprüche 1 oder 2, **dadurch gekennzeichnet, dass** das Taschenkegelwerkzeug, das Kammerwerkzeug und das Düsenwerkzeug eine Relativgeschwindigkeit am äußeren Ring vom zwischen 30 m/sec und 60 m/sec aufweist.

4. Verfahren gemäß Anspruch 1, **dadurch gekennzeichnet, dass** der radiale Scherspalt zwischen Rotor und Stator zwischen 0,5 mm und 2,5 mm beträgt.

5. Verfahren gemäß einem der Ansprüche 1 bis 4, **dadurch gekennzeichnet, dass** der Rotor-Stator-Homogenisator in den Schritten (b) und (d) ein Kammerwerkzeug ist, dessen axialer Scherspalt zwischen Rotor und Stator am innersten Ring maximal 5 mm beträgt, von innen nach außen abnimmt und am äußersten Ring ≥ 0,2 mm beträgt.

6. Vorrichtung zur Durchführung eines Verfahrens gemäß einem der Ansprüche 1 bis 5 umfassend eine Prozeßlinie mit einem ersten Abschnitt (I) mit einem oder mehreren Kammerwerkzeug(en) als Rotor-Stator-Homogenisatoren und einem zweiten Abschnitt (II) mit einem oder mehreren Kammerwerkzeug(en) als Rotor-Stator-Homogenisatoren und einem oder mehreren zwischen den Abschnitten (I) und (II) angeordneten, flüssigkeitsleitend mit beiden Abschnitten verbundenen Quelltanks.

7. Verfahren zur Aufreinigung von Proteinen umfassend die folgenden Schritte:
a) Herstellung einer proteinhaltigen Suspension ausHülsenfrüchten ausgewählt aus der Gruppe umfassend Cajanus cajan, Cicer arietum, Lens culinari, phaseolus vulgaris, Pisum sativum, Vica faba, Vigna mungo, Vigna radiata, Vigna unguiculata und Kombinationen hiervon durch ein Verfahren gemäß einem der Ansprüchen 1 bis 5;
b) zweistufige Abtrennung der proteinhaltigen Lösung (sog. Fruchtwasser) und der Stärke/Faser-Fraktion;
c) Fällung des Proteins aus der proteinhaltigen Lösung durch Anpassung des pH-Wertes unter Einstellung des isoelektrischen Punktes;
d) Abtrennung des gefällten Proteins;
e) Herstellen einer proteinhaltigen sauren Suspension durch Suspendieren des in Schritt (d) erhaltenen gefällten Proteins in Wasser;
f) Herstellung einer homogenen Suspension durch Intensivvermischung der proteinhaltigen sauren Suspension mittels eines Kammerwerkzeugs oder eines Hybridwerkzeugs aus Kammerwerkzeug und Düsenwerkzeug als Rotor-Stator-Homogenisator;
g) pH-Werterhöhung der Suspension aus Schritt (f) mittels eines Kammerwerkzeugs oder eines Hybridwerkzeugs aus Kammerwerkzeug und Düsenwerkzeug als Rotor-Stator-Homogenisator durch Zugabe einer alkalischen Lösung über Stator-Injektion im laufenden Rotorbetrieb bis zu einem pH-Wert von zwischen 5,5 und 9,0;
h) Abtrennung des Proteins von der flüssigen Phase durch Zentrifugation oder Filtration der Suspension aus Schritt (f).

8. Verfahren gemäß Anspruch 8, **dadurch gekennzeichnet, dass** derselbe Rotor-Stator-Homogenisator in den Schritten (f) und (g) verwendet wird.

9. Verfahren gemäß Anspruch 7, **dadurch gekennzeichnet, dass** der Rotor-Stator-Homogenisator ein Kammerwerkzeug ist, das bevorzugt eines oder mehrere der folgenden Eigenschaften aufweist:
- der radiale Scherspalt zwischen Rotor und Stator beträgt zwischen 0,5 mm und 5 mm;
- der axiale Scherspalt zwischen Rotor und Stator am innersten Ring beträgt maximal 5 mm;
- der axiale Scherspalt zwischen Rotor und Stator nimmt von innen nach außen ab;
- der axiale Scherspalt zwischen Rotor und Stator am äußersten Ring beträgt zwischen 1 mm und 0,2 mm
- das Kammerwerkzeug weist 2 bis 5 konzentrisch ausgerichtete Zahnkränze auf, die bevorzugt zur kombinierten Axial- und Radialspaltverstellung ausgebildet sind.

10. Verfahren gemäß einem der Ansprüche 7 oder 8, **dadurch gekennzeichnet, dass** das Kammerwerkzeug oder das Hybridwerkzeug aus Kammerwerkzeug und Düsenwerkzeug eine Relativgeschwindigkeit am äußeren Ring vom zwischen 20 m/sec und 60 m/sec aufweist.

11. Verfahren gemäß einem der Ansprüche 7 bis 10, **dadurch gekennzeichnet, dass** die alkalische Lösung in den zentral gelegenen Stator gegeben wird und bevorzugt durch Stator-Öffnungen direkt in die Mischzone des Homogenisators zugeführt wird.

12. Verfahren nach einem der Ansprüche 7 bis 11, **dadurch gekennzeichnet, dass** die in Schritt (e) hergestellte proteinhaltige saure Suspension einen pH-Wert von 4,0 bis 5,5 aufweist.

## Claims

1. A method for processing legumes selected from the group comprising Cajanus cajan, Cicer arietum, Lens culinaria, Phaseolus vulgaris, Pisum sativum, Vica faba, Vigna mungo, Vigna radiata, Vigna unguiculata and combinations thereof, comprising the
following steps:
(a) mixing the legumes with an aqueous extraction medium;
(b) pre-crushing the mixture from step (a) using a bag-cone tool and/or a chamber tool as a rotor-stator homogeniser, whilst adding an aqueous extraction medium via stator injection;
(c) incubating the legumes pre-crushed in step (b) with further addition of the extraction medium for a duration of at least 20 minutes;
(d) Fine grinding of the pre-crushed legumes incubated in accordance with step (c) using a chamber tool and/or a nozzle tool as a rotor-stator homogeniser.

2. A method for the processing of legumes according to claim 1, **characterised in that** the legumes are selected from the group comprising Cajanus cajan, Pisum sativum and combinations thereof .

3. A method according to one of claims 1 or 2, **characterised in that** the pocket cone tool, the chamber tool and the nozzle tool have a relative velocity at the outer ring of between 30 m/sec and 60 m/sec.

4. A method according to claim 1, **characterised in that** the radial shear gap between the rotor and the stator is between 0.5 mm and 2.5 mm.

5. A method according to any one of claims 1 to 4, **characterised in that,** in steps (b) and (d), the rotor-stator homogeniser is a chamber tool whose axial shear gap between the rotor and the stator at the innermost ring is a maximum of 5 mm, decreases from the inside to the outside, and is ≥ 0.2 mm at the outermost ring.

6. Apparatus for carrying out a method according to any one of claims 1 to 5, comprising a process line with a first section (I) having one or more chamber tools as rotor-stator homogenisers and a second section (II) having one or more chamber tools as rotor-stator homogenisers, and one or more source tanks arranged between sections (I) and (II), which are connected to both sections via fluid conduits.

7. A method for the purification of proteins comprising the following steps:
a) The production of a protein-containing suspension from legumes selected from the group comprising Cajanus cajan, Cicer arietum, Lens culinaris, Phaseolus vulgaris, Pisum sativum, Vicia faba, Vigna mungo, Vigna radiata, Vigna unguiculata and combinations thereof, by a method according to any one of claims 1 to 5;
b) two-stage separation of the protein-containing solution (so-called fruit water) and the starch/fibre fraction;
c) precipitation of the protein from the protein-containing solution by adjusting the pH to set the isoelectric point;
d) separation of the precipitated protein;
e) preparation of a protein-containing acidic suspension by suspending the precipitated protein obtained in step (d) in water;
f) Preparation of a homogeneous suspension by intensive mixing of the protein-containing acidic suspension using a chamber tool or a hybrid tool comprising a chamber tool and a nozzle tool as a rotor-stator homogeniser;
g) raising the pH of the suspension from step (f) using a chamber tool or a hybrid tool comprising a chamber tool and a nozzle tool as a rotor-stator homogeniser by adding an alkaline solution via stator injection whilst the rotor is in operation, to a pH value of between 5.5 and 9.0;
h) Separation of the protein from the liquid phase by centrifugation or filtration of the suspension from step (f).

8. A method according to claim 8, **characterised in that** the same rotor-stator homogeniser is used in steps (f) and (g).

9. A method according to claim 7, **characterised in that** the rotor-stator homogeniser is a chamber tool which preferably has one or more of the following characteristics:
- the radial shear gap between the rotor and the stator is between 0.5 mm and 5 mm;
- the axial shear gap between the rotor and the stator at the innermost ring is a maximum of 5 mm;
- the axial shear gap between the rotor and the stator decreases from the inside to the outside;
- the axial shear gap between the rotor and the stator at the outermost ring is between 1 mm and 0.2 mm
- the chamber tool comprises 2 to 5 concentrically aligned toothed rings, which are preferably designed for combined axial and radial gap adjustment.

10. A method according to one of claims 7 or 8, **characterised in that** the chamber tool or the hybrid tool comprising a chamber tool and a nozzle tool has a relative velocity at the outer ring of between 20 m/sec and 60 m/sec.

11. A method according to any one of claims 7 to 10, **characterised in that** the alkaline solution is introduced into the centrally located stator and is preferably fed directly into the mixing zone of the homogeniser through stator openings.

12. A method according to any one of claims 7 to 11, **characterised in that** the protein-containing acidic suspension produced in step (e) has a pH of 4.0 to 5.5.

## Revendications

1. Procédé de désagrégation de légumineuses choisies dans le groupe comprenant Cajanus cajan, Cicer arietum, Lens culinarius, Phaseolus vulgaris, Pisum sativum, Vica faba, Vigna mungo, Vigna radiata, Vigna unguiculata et leurs combinaisons, comprenant les
étapes suivantes :
(a) mélanger les légumineuses avec un agent d'extraction aqueux ;
(b) pré-broyage du mélange de l'étape (a) à l'aide d'un outil à cône à poche et/ou d'un outil à chambre sous forme d'homogénéisateur rotor-stator, avec ajout d'un agent d'extraction aqueux par injection dans le stator ;
(c) incubation des légumineuses pré-broyées à l'étape (b) avec ajout supplémentaire de l'agent d'extraction pendant une durée d'au moins 20 minutes ;
(d) Broyage fin des légumineuses pré-broyées et incubées selon l'étape (c) à l'aide d'un outil à chambre et/ou d'un outil à buse servant d'homogénéisateur rotor-stator.

2. Procédé de désagrégation de légumineuses selon la revendication 1, **caractérisé en ce que** les légumineuses sont choisies dans le groupe comprenant Cajanus cajan, Pisum sativum et des combinaisons de ceux-ci

3. Procédé selon l'une des revendications 1 ou 2, **caractérisé en ce que** l'outil à cône à poche, l'outil à chambre et l'outil à buse présentent une vitesse relative au niveau de l'anneau extérieur comprise entre 30 m/s et 60 m/s.

4. Procédé selon la revendication 1, **caractérisé en ce que** l'écartement de cisaillement radial entre le rotor et le stator est compris entre 0,5 mm et 2,5 mm.

5. Procédé selon l'une des revendications 1 à 4, **caractérisé en ce que** l'homogénéisateur rotor-stator dans les étapes (b) et (d) est un outil à chambre dont l'écart de cisaillement axial entre le rotor et le stator au niveau de l'anneau le plus interne est de 5 mm au maximum, diminue de l'intérieur vers l'extérieur et est ≥ 0,2 mm au niveau de l'anneau le plus externe.

6. Dispositif pour la mise en oeuvre d'un procédé selon l'une des revendications 1 à 5, comprenant une ligne de traitement comportant une première section (I) avec un ou plusieurs outils à chambre servant d'homogénéisateurs rotor-stator et une deuxième section (II) avec un ou plusieurs outils à chambre servant d'homogénéisateurs rotor-stator, ainsi qu'un ou plusieurs réservoirs d'alimentation disposés entre les sections (I) et (II), reliés de manière fluidique aux deux sections.

7. Procédé de purification de protéines d' comprenant les étapes suivantes :
a) préparation d'une suspension protéique à partir de légumineuses choisies dans le groupe comprenant Cajanus cajan, Cicer arietum, Lens culinarius, Phaseolus vulgaris, Pisum sativum, Vicia faba, Vigna mungo, Vigna radiata, Vigna unguiculata et leurs combinaisons, par un procédé selon l'une des revendications 1 à 5 ;
b) séparation en deux étapes de la solution protéique (appelée « eau de fruit ») et de la fraction amidon/fibres ;
c) précipitation de la protéine à partir de la solution protéique par ajustement du pH en réglant le point isoélectrique ;
d) séparation de la protéine précipitée ;
e) préparation d'une suspension acide protéique par mise en suspension dans l'eau de la protéine précipitée obtenue à l'étape (d) ;
f) Préparation d'une suspension homogène par mélange intensif de la suspension acide contenant des protéines à l'aide d'un outil à chambre ou d'un outil hybride combinant un outil à chambre et un outil à buses, utilisé comme homogénéisateur rotor-stator ;
g) Augmentation du pH de la suspension issue de l'étape (f) à l'aide d'un outil à chambre ou d'un outil hybride combinant un outil à chambre et un outil à buse, agissant comme un homogénéisateur rotor-stator, par ajout d'une solution alcaline via une injection au niveau du stator pendant le fonctionnement du rotor, jusqu'à atteindre un pH compris entre 5,5 et 9,0 ;
h) Séparation de la protéine de la phase liquide par centrifugation ou filtration de la suspension issue de l'étape (f).

8. Procédé selon la revendication 8, **caractérisé en ce que** le même homogénéisateur rotor-stator est utilisé dans les étapes (f) et (g).

9. Procédé selon la revendication 7, **caractérisé en ce que** l'homogénéisateur rotor-stator est un outil à chambre qui présente de préférence une ou plusieurs des caractéristiques suivantes :
- l'écart de cisaillement radial entre le rotor et le stator est compris entre 0,5 mm et 5 mm ;
- l'écart de cisaillement axial entre le rotor et le stator au niveau de la bague la plus interne est au maximum de 5 mm ;
- l'écart de cisaillement axial entre le rotor et le stator diminue de l'intérieur vers l'extérieur ;
- l'écart de cisaillement axial entre le rotor et le stator au niveau de l'anneau le plus extérieur est compris entre 1 mm et 0,2 mm
- l'outil à chambre comporte 2 à 5 couronnes dentées alignées concentriquement, qui sont de préférence conçues pour le réglage combiné de l'écartement axial et radial.

10. Procédé selon l'une des revendications 7 ou 8, **caractérisé en ce que** l'outil à chambre ou l'outil hybride composé d'un outil à chambre et d'un outil à buses présente une vitesse relative au niveau de l'anneau extérieur comprise entre 20 m/s et 60 m/s.

11. Procédé selon l'une des revendications 7 à 10, **caractérisé en ce que** la solution alcaline est introduite dans le stator situé au centre et est de préférence amenée directement dans la zone de mélange de l'homogénéisateur par des ouvertures du stator.

12. Procédé selon l'une des revendications 7 à 11, **caractérisé en ce que** la suspension acide contenant des protéines préparée à l'étape (e) présente un pH compris entre 4,0 et 5,5.
